# EUROPEAN PATENT APPLICATION

(11) **EP 4 614 343 A1**
(43) Date of publication of application: **10.09.2025**
(21) Application number: 24161208.4
(22) Date of filing: 04.03.2024
(51) Int. Cl.: G06F 16/2455

(54) **DETERMINING A STORAGE FORMAT**

(71) Applicant: Helsing GmbH, 81671 Munich (DE)
(72) Inventor: BAKER, James, 81671 Munich (DE); TOMLIN, Luke, 81671 Munich (DE)
(74) Representative: Rummler, Felix

(57) **Abstract**

A computer-implemented method of dynamically determining data packages of an input data stream, the method comprising: receiving an input data stream comprising a raw data subset; determining characteristics of the raw data subset; based on the characteristics and a predetermined set of rules, determining a storage format for one or more data packages obtainable from the raw data subset; and storing the one or more data packages according to the storage format.

## Description

### Technical Field

The present disclosure relates to systems, methods, and computer program products for dynamically determining a storage format from an input data stream. The disclosure is applicable in the field of sensor data processing.

### Background

A frequent problem in data processing is efficient storage of data obtained from raw data streams. For example, sensors may generate a continuous feed of data, which comprises a huge amount of data that is computationally expensive to process. Moreover, parallel processing of such a feed of data may be difficult.

A known solution includes using a network package capture tool to store packages. This solution results in a dataset that cannot be easily queried or filtered.

There is a need for systems and methods that overcome these shortcomings.

### Summary

Disclosed and claimed herein are systems, methods, and computer program products for dynamically determining a storage format from an input data stream.

A first aspect of the present disclosure relates to a computer-implemented method of dynamically determining a storage format from an input data stream. The method comprises the following steps:
- receiving an input data stream comprising a raw data subset;
- determining characteristics of the raw data subset;
- based on the characteristics and a predetermined set of rules, determining a storage format for one or more data packages obtainable from the raw data subset; and
- storing the one or more data packages according to the storage format.

The data packages may include the raw data subset or a processed or compressed version thereof. The storage format preferably includes an indication of a package size of the one or more data packages.

The storage format and package size may be dynamically adjusted based on the characteristics of the received data. The raw data may include any data prior to a process step related to the data. For example, the raw data subset may comprise raw video data from a camera that may be processed. The raw data may comprise typed raw data that further includes type information. The characteristics may be determined by analysing the data in any way, for example, by analysing the type data.

This allows adapting the storage format to the input data stream. If the input data stream changes, the storage format can be changed accordingly. For example, for video data, the package size can be determined such that each package includes video data of a predetermined time interval having a fixed length, rather than video data of a fixed size, even if the resolution of the input data stream changes. This allows determining, by accordingly set rules, data packages of certain uniform predetermined properties associated with subsequent processes to be performed on the stored data packages. The data packages may be made available, for example, on a file server, for these subsequent processes that may run on a client device.

In an embodiment, the computer-implemented method further comprises, based on the determined characteristics and the predetermined set of rules, determining metadata of the raw data subset and storing the metadata.

The metadata may be associated with the stored data package and usable to facilitate processing the data packages by a process. For example, in case of video data, the metadata may comprise a time stamp indicating the beginning and/or end of recording of the raw data obtainable or obtained from the data package. Subsequently, the data packages for a specific time interval are thus easily retrievable. The metadata may include other information obtainable from the characteristics, such as content or format.

In another embodiment, the computer-implemented method comprises indexing the one or more data packages, preferably by processing the characteristics of the raw data subset.

Thereby, the data can more easily queried and filtered. Indexing may generate metadata comprising a content indication and/or a timestamp of the raw data subset.

In a further embodiment, the computer-implemented method further comprises one or more of the following steps:
- determining a respective data package for each of the raw data subsets;
- determining respective metadata items for a plurality of different, preferably consecutively received, raw data subsets of the input data stream; and/or
- storing and associating the respective metadata items with the corresponding respective data package.

Thereby for each raw data subset, a respective metadata item may be generated. The metadata items may differ for different raw data subsets, as far as the characteristics of the raw data differ. For example, the different raw data subsets may comprise video streams, wherein each raw data subset has a different resolution. In this case, metadata including the duration may differ if the packages are of the same size (longer duration for lower resolution). This allows consistent storage of data packages for heterogeneous input raw data. Determining a respective data package for each of the raw data subsets preferably includes processing any type information included in the input data stream into the metadata, and storing any raw data comprised in the raw data subset in the data package.

In yet another embodiment, the respective metadata items are stored in a single metadata file associated with the plurality of stored data packages; and storing the respective metadata items preferably comprises updating the metadata file. In this case, the metadata file may serve as an index to the data packages.

In yet a further embodiment, the metadata comprise one or more of the following:
- a data package identifier indicative of a corresponding data package;
- a universal unique identifier, UUID, indicative of a storage operation;
- a stream identifier indicative of the input data stream;
- temporal information indicative of a start and/or end time of receipt of the raw data subset corresponding to the data package;
- an indication of a size of the corresponding data package; and/or
- a type indication of a content and/or data type of the raw data subset.

The metadata may be retrieved by applications processing the data packages and assist such processing. The UUID allows determining the storage operation and gives information on data provenance. The stream identifier can be used to determine the input data stream, from which a data source of the raw data, such as a sensor device, may be inferred. A data package identifier allows determining the corresponding data package. The temporal information allows inferring information on the content of the data, such as a duration of the recording. An indication of the size of the corresponding data package allows the application to determine if it can process the data on a machine on which it is currently operating, given the memory available on that machine. The type information allows determining an application by which the data can be processed.

In another embodiment, the input data stream comprises:
- a stream of single bits or bytes; and/or
- a stream of structured data bits or bytes; and/or
- a stream of typed data bits or bytes.

A stream of single bits or bytes may be processed according to the predetermined rules simply by cutting the data into parts of predetermined length and storing each part in one data package. The predetermined rules may, however, comprise determining an entropy of the data as one of its characteristics, and cutting the data into parts of a length that varies according to the entropy. Metadata may include an entropy indication, or a length of the data package. This allows generating typed data from raw data. However, the input data stream may comprise structured data comprising some structural information, such as a label of an origin, or a series of time stamps. In this case, the predetermined rules may comprise conversion of the input data based on the time stamps, such as determining a bit rate and compressing the raw data subsets by a compression algorithm that may depend on the bit rate, e.g., strong compression for data received at a higher bit rate, and no compression for data received at a low bit rate.

The stream may comprise typed data bits or bytes comprising a type information. Such information may indicate that the input data stream comprises, e.g., a particular type of video stream. The predetermined rules may comprise determining the type information in addition to other characteristics and determining the storage format accordingly. This allows generating data packages that have a defined generic format from an input data stream wrapped into type information, which may have a more specific format.

In a further embodiment, the characteristics are indicative of a content and/or a data type of the raw data subset. An indication of a content allows determining metadata that are reflective of the content. For example, a characteristic may include information on a data source of the input data stream. A data source may include a sensor. The characteristic allows inferring which sensor the input data stream comes from, and thus making conclusions on the content of the data. If the sensor is, for example, a temperature sensor built into a machine that records a specific temperature, then the raw data subset comprises values of that temperature for a given time interval. Its format can be inferred to be a scalar.

In another embodiment, the input data stream further comprises type information, and wherein determining the characteristics comprises processing the type information. It is preferred to include type information, which may include any indication of a type. This has the advantage that the format can be controlled by a source of the input data stream. In other words, including different type information can lead to a different storage format.

In yet another embodiment, the predetermined set of rules includes encoding image frames into a video format in response to the characteristics including an indication that the raw data comprise the image frames. Storing images in a video format is preferred because it reduces the overhead caused by the header information in a file format. Such header information may be stored only once for a video file in the video format, rather than for single image files in an image format.

In a further embodiment, the predetermined set of rules includes determining the one or more packages as packages of a predetermined duration and/or predetermined size. Packages of a predetermined, preferably standardized, size, can be used by a variety of applications using a foreseeable amount of memory and compute resources. Packages of a predetermined, preferably standardized, duration may relate to a predetermined duration of the input data stream and thus relate to a storage operation of a fixed duration.

The duration and/or size is preferably chosen to obtain a good balance between
- too large metadata overhead due to a too small package size on the one hand and
- too low granularity due to a too large package size.

Rather, the package size can be determined at a value that allows retrieving the data at a granularity appropriate for the later use case.

In a further embodiment, the computer-implemented method further comprises compressing the one or more data packages, and wherein the metadata preferably comprises a compressed size of a corresponding data package and an uncompressed size of a corresponding data package.

By compressing the data packages, storage space can be used more efficiently, albeit at the cost of processing speed when generating the data packages. Including an indication of the compressed size into the metadata allows any application accessing the package to determine if the technical requirements for loading the data package are met, e.g. when loading the package from a server. Including an indication of the uncompressed size allows any application accessing the package to determine if there is enough memory for processing the package once it is decompressed.

A second aspect of the present disclosure relates to a system comprising one or more processors and one or more storage devices, wherein the system is configured to perform the computer-implemented method of the first aspect of the present disclosure.

A third aspect of the present disclosure relates to a computer program product for loading into a memory of the system. The computer program comprises instructions, that, when executed by a processor of the system, cause the system to execute a method of the first aspect of the present disclosure.

In an embodiment, a non-transitory computer-readable storage medium is provided that stores instructions executable by one or more processors. The instructions comprise any of the steps of a method of the first aspect of the present disclosure.

A fourth aspect of the present disclosure relates to a computer program product comprising a data structure generable by the method of the first aspect of the present disclosure. In an embodiment, a non-transitory computer-readable storage medium is provided that stores the data structure.

All properties and embodiments that apply to the first aspect also apply to the second, third, and fourth aspect.

### Brief description of the drawings

The features, objects, and advantages of the present disclosure will become more apparent from the detailed description set forth below when taken in conjunction with the drawings in which like reference numerals refer to similar elements.
- Figure 1 shows a flow chart depicting a computer-implemented method 100 of dynamically determining data packages from an input data stream
- Figure 2 shows a block diagram depicting a system 200 according to an embodiment.
- Figure 3 shows a block diagram depicting input data streams according to embodiments.
- Figure 4 shows a block diagram depicting a set 400 of rules.
- Figure 5 shows a block diagram depicting a storage format 500.

### Detailed description of the preferred embodiments

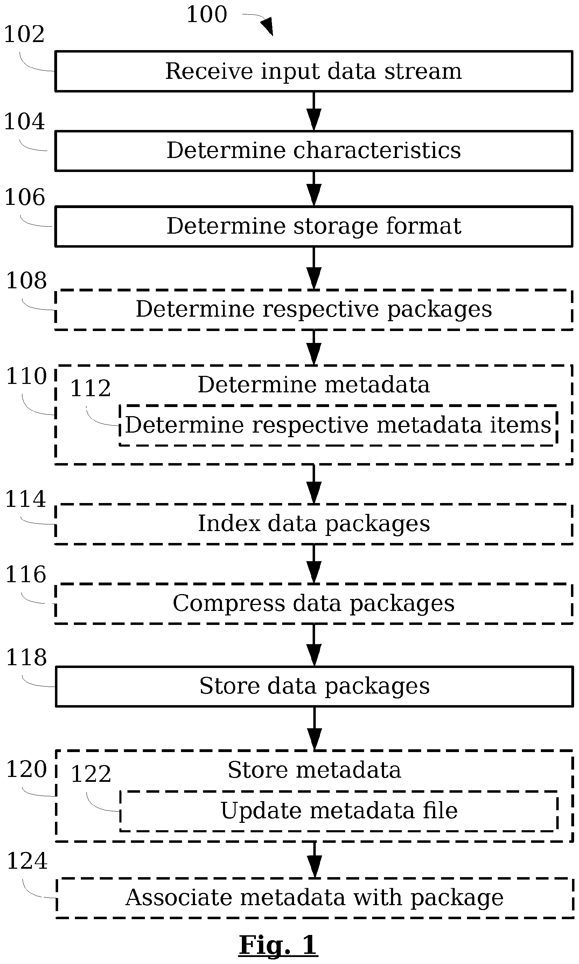

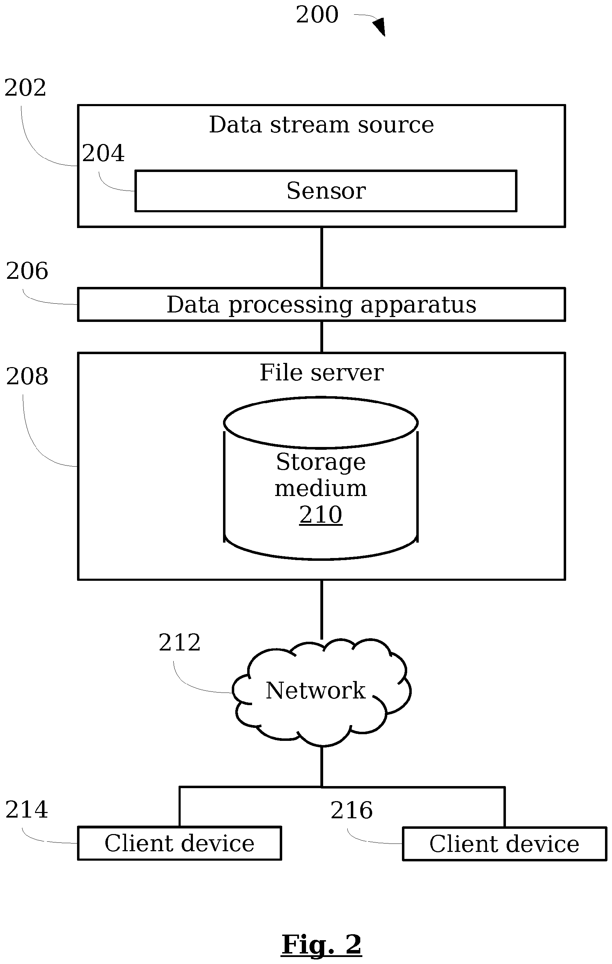

Figure 1 shows a flow chart depicting a computer-implemented method 100 of dynamically determining data packages from an input data stream. The method 100 may be executed by a data processing apparatus 206 and/or a file server 208 as shown in Figure 2.

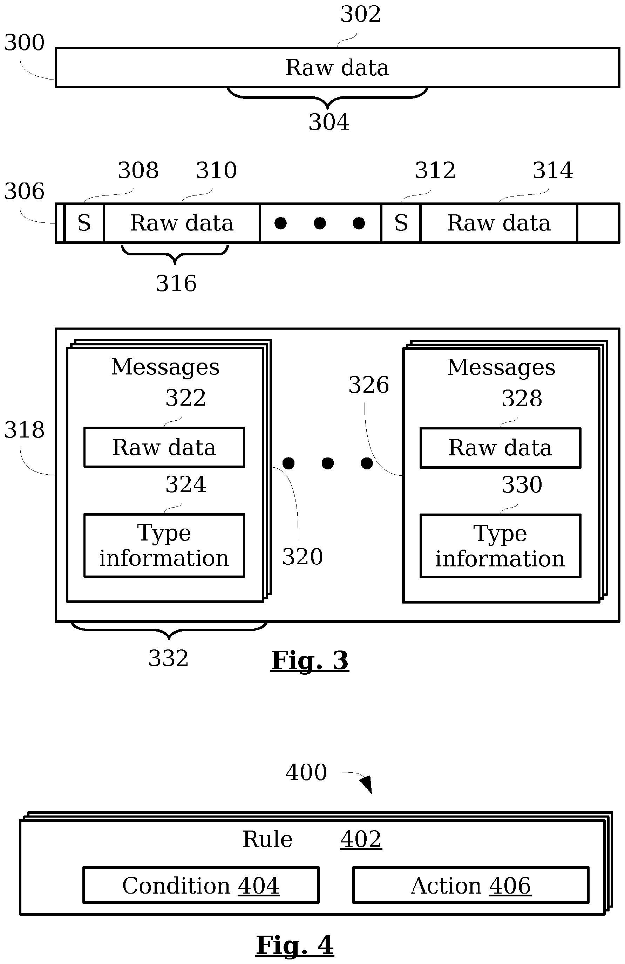

Method 100 begins by receiving, 102, an input data stream. The input data stream comprises at least one raw data subset. The raw data subset may include part of the input data stream or consist of the input data stream. In particular, the input data stream may include an input data stream of one of the examples 300, 306, 318 shown in Figure 3. In embodiments, a plurality of input data streams may be received. This allows combining data from different sources, such as a video stream showing an environment and an audio stream containing sound from that environment.

At step 104, characteristics of the raw data subset are determined. This step preferably includes processing the raw data subset to derive statistical properties, such as an entropy, and/or processing structural information and/or type information indicative of the characteristics included in the input data stream.

At step 106, a storage format is determined. The determination is based on the characteristics and a predetermined set of rules. Determination of the storage format preferably comprises processing the characteristics of the raw data subset, e.g., by applying the predetermined rules which may comprise conditions that depend on the characteristics. The storage format comprises format specifications for data packages obtainable from the raw data subset. For example, a rule may specify that a raw data subset comprising video data is to be compressed into an MP4 format. In this case, the data packages include an MP4 compressed raw data subset. Optionally, the storage format comprises metadata. Such metadata may include an indication of the data type of the data package to facilitate processing by further applications. Since the storage format depends on the characteristics of the raw data subset, it can be dynamically adjusted based on the input data stream. Any changes in the input data stream can lead to an automatic adaptation of the storage format. Determining the storage format may comprise determining packages.

At optional step 108, a respective packages are determined for each of a plurality of raw data subsets. The raw data subsets may be included in the same input data streams, and preferably be consecutively received. This allows breaking up the input data stream into subsets and processing the subsets into data packages. The data packages are then accessible in at a predetermined granularity. In other words, a large amount of raw data may be separated into smaller subsets. Moreover, if a plurality of input data streams are received, raw data subsets from the input data streams may be stored together in different data packages according to the storage format.

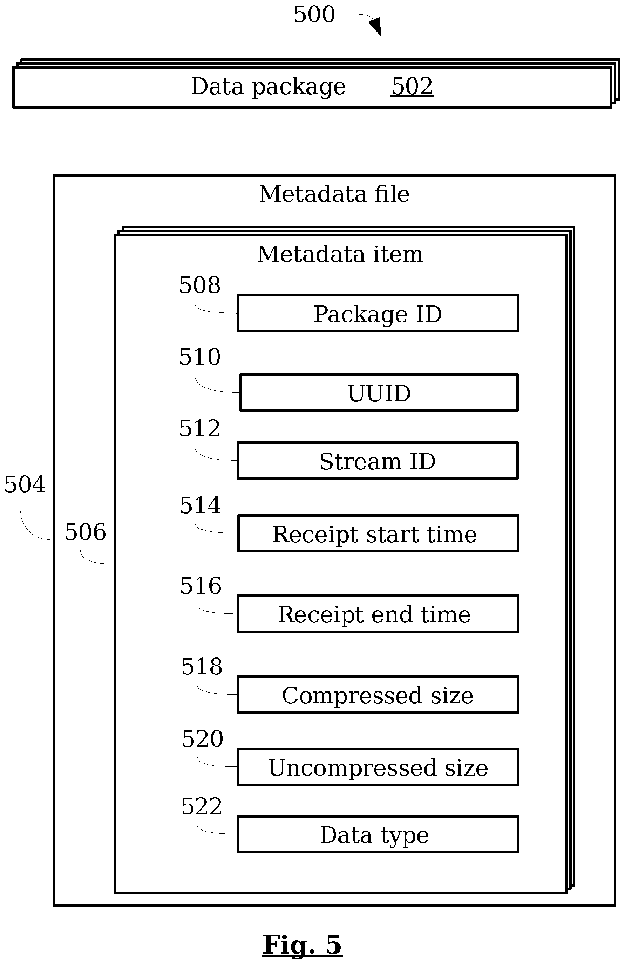

At optional step 110, metadata of the raw data subset are determined. The metadata may include the characteristics of the raw data subset, an indication of an action executed during determination of the storage format, or other metadata as described with respect to Figure 5.The metadata may be associated with the stored data package and usable to facilitate processing the data packages by a process. It is preferred to determine, 112, respective metadata items, each of which is related to a respective data package, and to associate each metadata item with a data package. It is further preferred to store the metadata items into a single metadata file. This has the advantage that a single database is created that combines data from different streams. Applications may access the database and search, for example, for data from all streams recorded in a predetermined time interval.

It is further preferred to index, 114, the data packages. In this case, the index may be determined as metadata of the raw data. The index allows querying and filtering the data. The index may have the form of the metadata file 504.

At optional step 116, the data packages are compressed. This reduces the storage requirements for storing the data packages. It also reduces the bandwidth requirements if the data packages are sent to a file server for storage.

At step 118, the data packages are stored. Storing the data packages may comprise transmitting data packages from a computing apparatus to a file server.

At optional step 120, the metadata are stored. Storing the metadata may comprise storing the respective metadata items in a single metadata file associated with the plurality of stored data packages. If a metadata file already exists, it is preferred to update, 122, the metadata file by including the new metadata item.

At optional step 122, the metadata are associated with the package. This is preferably done by assigning a package identifier to each package and storing the package identifier in the metadata and the package. However, the association may be created by storing a pointer to the data package in the metadata.

Figure 2 shows a block diagram depicting a system 200 according to an embodiment. System 200 comprises a data stream source 202 configured to determine an input data stream. In this embodiment, the data stream source 202 comprises a sensor 204 configured to measure a quantity continuously. For example, the sensor 204 may include a camera observing a scene.

Thereby, the data stream source 202 determines an input data stream, e.g. the video raw data of the camera, and sends it to data processing apparatus 206 configured to execute at least parts of method 100 of Figure 1. The data processing apparatus 206 is configured to receive the input data stream, detect its characteristics, determine a storage format, and send data packages for storage to the file server 208. It is preferred to compress the data packages, so that transmission to the file server 208 is accelerated. Thereby, the data processing apparatus 206 updates the data stored on the file server 208 by adding new data packages generated from an ongoing input data stream from the data stream source 202.

File server 208 is configured to store the data packages in a storage medium 210 to make it retrievable by client devices 214, 216 via network 212. Application of method 100 allows reducing the requirements for data transfer to the file server and for storage space in storage medium 210. Moreover, the data packages stored in storage medium 210 allow access by the client devices 214, 216 at a fine granularity that allows reducing the requirements for data transfer over network 212. A further advantage is that any compression, encoding, or other processing tasks that need to be done to the input data stream can be done once by data processing apparatus 206. Compared to storing the input data stream, this avoids the need to execute these processing steps on the client devices 214, 216 repeatedly. A user operating a client device 214, 216 will therefore not see any of the processing workload on the client device. Method 100 thereby encodes data in a way that is invisible to the user.

It is further preferred to regularly distribute, in predetermined time intervals, a copy of the metadata file obtainable by method 100 from the file server 208 to the client devices 214, 216. Thereby, search operations using the metadata file can be done by the client devices 214, 216 off-line without using the network 212. This increases the speed at which a search can be conducted.

Figure 3 shows a block diagram depicting input data streams according to embodiments.

Exemplary input data stream 300 comprises only raw data 302. The raw data subset 304 may be chosen from the input data stream 300, for example by choosing a subset of a fixed size. Another exemplary input data stream 306 comprises structural information 308, 311 and raw data 310, 314.

The structural information 308, 312 may comprise standardized flags inserted into the raw data stream 306 on a regular basis in order to transmit information about the structure of the raw data 310, 314. For example, the raw data 310, 314 may be continuously determined during a time span, and the flags may be introduced after predetermined intervals including an indication of an elapsed time. A data processing apparatus receiving the input data stream 306 may be aware of the function and format of the flags and determine a raw data bit rate as a characteristic of the subset 316 of the raw data stream 306 accordingly. The subset may be chosen as a predetermined size of raw data 310, 314 in raw data stream 306. The size of the subset may depend on the characteristics, such as processing only a predetermined duration of raw data 310, 314 in raw data stream 306.

Yet another exemplary input data stream may comprise a plurality of messages 320, 326, comprising raw data 322, 328 as a payload and type information 324, 330. This is an example of typed raw data, wherein the raw data is associated with or wrapped into type information. A subset 332 of the messages may be chosen for processing. In this case, a computing apparatus receiving the input data stream 318 may be operable to distinguish the individual messages 320, 326 and decode the data format. In this case, determining the characteristics of the raw data may comprise reading out type information 324 included in the messages 320 of the subset 332. In an example, the raw data comprises video frames of a video feed, and the type information comprises information on encoding format, relative or absolute time, width, and/or height of a video frame.

Figure 4 shows a block diagram depicting a set 400 of rules. Each rule 402 comprises a condition 404 on the subset of the input data stream, and the action 406 to be executed if the condition 404 is fulfilled. An example of a rule 402 comprises the condition 404 that the characteristics include an indication that the raw data comprise the image frames. The corresponding action 406 is encoding image frames into the MPEG-4 Part 14 video format. Application of this rule allows saving space in storage and defining a granularity at which the image frames are retrievable. Moreover, the encoding is done centrally in the data processing apparatus and not separately, and thus repeatedly, by each client. The use of the MPEG-4 Part 14 video format increases compatibility with a variety of clients. Other video formats may be chosen.

Another example of a rule 402 comprises the condition 404 that an input data stream is received. This rule therefore applies irrespective of any more specific characteristics of the input data stream. A corresponding action is determining the one or more packages as packages of a predetermined duration of receipt of the input data stream. This rule ensures that each package refers to a predetermined time of receipt at the data processing apparatus. In principle, a variety of rules can be used alone or in combination.

Figure 5 shows a block diagram depicting a storage format 500.

Data according to storage format 500 may be stored by file server 208 and accessible by client devices 214, 216 of system 200.

Storage format 500 comprises a plurality of data packages 502. Each of the data packages 502 may comprise a raw data subset. It is, however, preferred to process the raw data subset to determine the data package. For example, the data package 502 may comprise an output of a compression operation on the raw data subset, or the raw data subset after conversion into another format.

The data package 502 may comprise raw data from a plurality of different input data streams. In a sensor fusion application, a plurality of different sensors may determine a plurality of data streams. Data packages 502 based on the data streams may be stored in a centralized data storage. A preferred format of the data packages 502 is PCAP, which is compatible with known applications. It is preferred to compress the data packages 502, e.g., using the LZ4 algorithm. However, the data packages 502 may be of different types. For some data, such as image or video data in the input data stream, encoding as a video file is preferable. For other data, such as text, an LZ4 compressed PCAP format is preferable. The format may in particular depend on a compression algorithm used to generate the data package.

In this embodiment, metadata generable by method 100 are included into a metadata file 504 comprising a plurality of metadata items. It is preferred if one metadata item 506 corresponds to each data package 502, so that the metadata item 506 describes properties of the corresponding data package. The metadata file 504 has preferably a database format, such as SQLite. The following properties of metadata item 506 are given by example. In embodiments, different combinations of these properties may be included and others left out.

The metadata item 506 comprises a package identifier 508 that unambiguously identifies the corresponding data package 502. The metadata item 506 further comprises a universal unique identifier (UUID) 510 indicative of a storage operation by which the corresponding data package was generated, by which the metadata file 504 was generated, and/or by which the metadata file 504 was amended. This enables clients to cross-check the metadata item 506 with data from other databases.

The metadata item 506 further comprises a stream identifier 512 indicative of a stream on which the data in the corresponding data package 502 are based. For example, in case of an audio/video recording, a first stream may relate to the video feed of a camera, and a second stream may refer to an audio stream generated by a microphone. A benefit is that the stream identifier 512 comprises information on the lineage of the data package, i.e. allows tracing back from the metadata item 506 to the raw data.

The metadata item 506 may further comprise temporal information, such as a receipt start time 514 at which the computing apparatus that has generated the data package has begun receiving the raw data stream and a receipt end time 516 at which the computing apparatus has ended receiving the raw data stream.

The metadata item 506 may further comprise an indication of a compressed size 518 of the data package, and an uncompressed size 520 of the data package. This allows a client device retrieving the data package to determine, by the compressed size 518, the download time given the bandwidth provided by the network connection between client and server. It further allows the client to determine, by the uncompressed size 520, if the memory and compute capacities available to it are sufficient to process the data package. It is preferred to specify the temporal information using a known standard, such as ISO 8601, for compatibility. The metadata item 506 further comprises a data type 522 of the data package, which allows searching for specific data types.

Use of a single metadata file 504 associated with the data packages 502 has the advantage that the metadata file 504 can be used as an index to the data packages 502. In other words, client devices accessing data stored in storage format 500 can access the metadata file 504, search for a property therein, and determine if one or more data packages 502 among data packages 502 have that property. For example, a client device could search for all video files received in a given interval. A file server would then determine the packages fulfilling these conditions by processing the metadata file 504, and output the relevant metadata items and data packages 502.

The resulting structure of a plurality of data packages 502, representing the received data stream, and metadata file 504 has the advantage that it can be used to capture streaming data, and that compression and encoding mechanisms may be used to reduce the size of the data on a storage medium. Data need not be cached as raw data, but the relevant subset of the data is stored. This happens by a process that may be invisible to the user.

The resulting structure can be queried, i.e. metadata about the streams is describable without having to re-read the data. The structure is also filterable. The packages are preferably stored on a server to be retrievable by one or more client devices. In this case, querying and filtering the metadata avoids the need to download the raw data subset itself. Since the metadata are typically smaller than the subset, bandwidth is saved. A further advantage is that the structure can be processed in parallel.

### Reference signs

- 100: Method
- 102-124: Steps of method 100
- 200: System
- 202: Data stream source
- 204: Sensor
- 206: Data processing apparatus
- 208: File server
- 210: Storage medium
- 212: Network
- 214: Client devices
- 300: Data stream
- 302: Raw data
- 304: Data subset
- 306: Data stream
- 308: Structural information
- 310: Raw data
- 312: Structural information
- 316: Subset
- 318: Data stream
- 320: Messages
- 322: Raw data
- 324: Type information
- 326: Messages
- 328: Raw data
- 330: Type information
- 332: Subset
- 400: Set of rules
- 402: Rule
- 404: Condition
- 406: Action
- 500: Storage format
- 502: Data packages
- 504: Metadata file
- 506: Metadata item
- 508: Package identifier
- 510: UUID
- 512: Stream identifier
- 514: Start time
- 516: End time
- 518: Compressed size
- 520: Uncompressed size
- 522: Data type

## Claims

1. A computer-implemented method (100) of dynamically determining data packages (502) of an input data stream (300, 306, 318), the method comprising:
receiving (102) an input data stream (300, 306, 318) comprising a raw data subset (304, 316, 332);
determining (104) characteristics of the raw data subset (304, 316, 332);
based on the characteristics and a predetermined set (400) of rules (402), determining (106) a storage format (500) for one or more data packages (502) obtainable from the raw data subset (304, 316, 332); and
storing (118) the one or more data packages (502) according to the storage format (500).

2. The computer-implemented method (100) of claim 1, further comprising:
based on the determined characteristics and the predetermined set of rules, determining (110) metadata of the raw data subset (304, 316, 332) and storing the metadata.

3. The computer-implemented method (100) of any of the preceding claims, comprising indexing (114) the one or more data packages (502), preferably by processing the characteristics of the raw data subset (304, 316, 332).

4. The computer-implemented method (100) of any of the preceding claims, further comprising:
determining (108) a respective data package (502) for each of the raw data subsets (304, 316, 332);
determining (112) respective metadata items (506) for a plurality of different, preferably consecutively received, raw data subsets (304, 316, 332) of the input data stream (300, 306, 318); and/or
storing (120) and associating (124) the respective metadata items (506) with the corresponding respective data package (502).

5. The computer-implemented method (100) of claim 3, wherein:
the respective metadata items (506) are stored in a single metadata file (504) associated with the plurality of stored data packages (502); and
storing the respective metadata items (506) preferably comprises updating (122) the metadata file (504).

6. The computer-implemented method (100) of any of the preceding claims, wherein the metadata comprise one or more of the following:
a universal unique identifier, UUID, (510) indicative of a storage operation;
a stream identifier (512) indicative of the input data stream (300, 306, 318);
a data package identifier (508) indicative of a corresponding data package (502);
temporal information indicative of a start (514) and/or end (516) time of receipt of the raw data subset (304, 316, 332) corresponding to the data package (502);
an indication (518, 520) of a size of the corresponding data package (502); and/or
a type indication (522) of a content and/or data type of the raw data subset (304, 316, 332).

7. The computer-implemented method (100) of any of the preceding claims, wherein the input data stream (300, 306, 318) comprises:
a stream of single bits or bytes; and/or
a stream of structured data bits or bytes; and/or
a stream of typed data bits or bytes.

8. The computer-implemented method (100) of any of the preceding claims,
wherein the characteristics are indicative of a content and/or a data type of the raw data subset (304, 316, 332).

9. The computer-implemented method (100) of any of the preceding claims,
wherein the input data stream (300, 306, 318) further comprises type information (324, 330) and wherein determining the characteristics comprises processing the type information (324, 330).

10. The computer-implemented method (100) of any of the preceding claims, wherein the predetermined set of rules (402) includes encoding image frames into a video format in response to the characteristics including an indication that the raw data comprise the image frames.

11. The computer-implemented method (100) of any of the preceding claims, wherein the predetermined set of rules (402) includes determining the one or more data packages (502) as data packages (502) of a predetermined duration and/or predetermined size.

12. The computer-implemented method (100) of any of the preceding claims,
further comprising compressing (116) the one or more data packages (502), and wherein the metadata preferably comprises a compressed size (518) of a corresponding data package and an uncompressed size (520) of a corresponding data package.

13. A system (200) comprising one or more processors and one or more storage devices, wherein the system is configured to perform the computer-implemented method (100) of any one of claims 1-12.

14. A computer program product for loading into a memory of a computer, comprising instructions, that, when executed by a processor of the computer, cause the computer to execute a computer-implemented method (100) of any of claims 1-12.

15. A computer program product comprising a data structure generable by the computer-implemented method (100) of any of claims 1-12.
